# EUROPEAN PATENT APPLICATION

(11) **EP 2 703 063 A1**
(43) Date of publication of application: **05.03.2014**
(21) Application number: 12182954.3
(22) Date of filing: 04.09.2012
(51) Int. Cl.: B01D 53/50

(54) **Desulphurization and cooling of process gas**

(71) Applicant: Alstom Technology Ltd, 5400 Baden (CH)
(72) Inventor: Stallmann, Olaf, 55270 Essenheim (DE); Heinz, Gerhard, 73732 Esslingen (DE)

(57) **Abstract**

The present invention relates to a method of cleaning a process gas containing sulphur dioxide, comprising removing sulphur dioxide from the process gas by contacting the process gas with seawater to generate an at least partly cleaned process gas in a first gas cleaning device. In a second gas cleaning device, being arranged in direct fluid connection with the first gas cleaning device, the at least partly cleaned process gas having passed through the first gas cleaning device is cooled to condense water there from, thereby generating a process gas having a reduced content of water vapour. At least a part of the condensed water generated in the second gas cleaning device is passed to the first gas cleaning device. The present invention moreover relates to a gas cleaning system for cleaning of a process gas containing sulphur dioxide.

## Description

### Field of the Invention

The present invention relates to a system and a method of cleaning a process gas containing sulphur dioxide by contacting the process gas with seawater for removal of sulphur dioxide from said process gas.

### Background of the Invention

Process gases containing sulphur dioxide, SO₂, are generated in many industrial processes. One such industrial process is the combustion of a fuel, such as coal, oil, peat, waste, etc., in a combustion plant, such as a power plant. In such a power plant, a hot process gas, often referred to as a flue gas, is generated containing pollutants including acid gases, such as sulphur dioxide, SO₂. It is necessary to remove as much of the acid gases as possible from the flue gas before the flue gas may be emitted to the ambient air. Another example of an industrial process in which a process gas containing pollutants is generated is the electrolytic production of aluminium from alumina. In that process, a process gas containing sulphur dioxide, SO₂, is generated within venting hoods of the electrolytic cells.

WO 2008/105212 discloses a boiler system comprising a boiler, a steam turbine system, and a seawater scrubber. The boiler generates, by combustion of a fuel, high-pressure steam utilized in the steam turbine system for generating electric power. Seawater is collected from the ocean, and is utilized as a cooling medium in a DCC of the steam turbine system. The seawater is then utilized in the seawater scrubber for absorbing sulphur dioxide, SO₂, from flue gas generated in the boiler. Sulphur dioxide, SO₂, is absorbed in the seawater and forms sulfite and/or bisulfite ions. Effluent seawater from the seawater scrubber is forwarded to an aeration pond. Air is bubbled through the effluent seawater in the aeration pond for oxidation by means of oxygen gas contained in the air, of the sulfite and/or bisulfite ions to sulphate ions for release back to the ocean together with the effluent seawater.

### Summary of the Invention

An object of the present invention is to provide a seawater based method and a system for cleaning a process gas containing sulphur dioxide, such as a carbon dioxide rich flue gas generated in a boiler combusting a fuel in the presence of a gas containing oxygen, the method being improved with respect to sulphur dioxide removal efficiency and process integration.

Another object of the present invention is to provide a method and a system for cleaning a process gas containing sulphur dioxide that require less capital expenses.

The above-noted objects are, in a first aspect, achieved by means of a method comprising:
in a first gas cleaning device, removing sulphur dioxide from the process gas by contacting the process gas with seawater to generate an at least partly cleaned process gas;
in a second gas cleaning device being arranged in direct fluid connection with the first gas cleaning device, cooling said at least partly cleaned process gas having passed through said first gas cleaning device to condense water there from, thereby generating a process gas having a reduced content of water vapour, and
passing at least a part of the condensed water generated in the second gas cleaning device to the first gas cleaning device.

The method according to the invention may advantageously be used in industrial carbon capture and storage (CCS) applications, such as in an oxyfuel boiler island. The present method may enable improved removal of sulphur dioxide (SO₂, as well as other sulphur oxides; SOx, such as SO₃) as compared to previous seawater based methods, by combining sulphur dioxide removal and cooling operations in devices that are arranged in direct fluid connection as described above.

In known industrial CCS applications, cooling is performed in an acidic stage separate from the alkaline sulphur dioxide removal. Acidic conditions are generally required in order to avoid carbonate formation in e.g. cooling equipment. Carbonate formation may cause scaling or fouling on e.g. packings and heat-exchanger surfaces. In the present method, cooling may be performed in direct fluid connection with the alkaline stage of the sulphur dioxide removal without increasing the risk of carbonate formation. In addition, seawater carry-over in e.g. ductwork, which may be detrimental in that it causes corrosion, may further be minimized.

Cooling of the process gas in the gas cleaning device enables condensation of water vapour from the process gas. The process gas leaving the second gas cleaning device thus contains a lower amount of water vapour than the at least partly cleaned process gas having passed through the first gas cleaning device. A process gas containing only a low amount of water vapour is consequently forwarded for further processing, such as for example gas compression operations.

Passing of at least a part of the condensed water from said second device to said first device may be advantageous in that it allows utilization of the condensed water in other parts of e.g. a CCS process. This may moreover reduce the overall water consumption of the method.

According to one embodiment, cooling in the second gas cleaning device comprises contacting the at least partly cleaned process gas with a cooling liquid to condense water there from, thereby further generating a used cooling liquid. By use of a cooling liquid, such as for example water, the partly cleaned process gas may be efficiently cooled and the content of water vapour comprised in the process gas may thereby efficiently be reduced by condensation. In addition, much of the remaining content of sulphur dioxide in the partly cleaned process gas may be removed by such direct contact with a cooling liquid.

According to one embodiment, the method further comprises polishing, in the second gas cleaning device, the partly cleaned process gas to further remove sulphur dioxide there from, thereby generating a cleaned process gas. An advantage of this embodiment is that the content of SOx compounds (and other traces) in the process gas may be further reduced, such that a cleaned process gas is generated.

According to one embodiment, the method further comprises controlling the pH-value of the cooling liquid to be in the range of 4,5 - 7 by supply of an alkaline substance. An advantage of this embodiment is that a pH of 4,5-7, and more preferably a pH of 5 - 6, may improve sulphur dioxide removal efficiency. A good gas polishing effect is hence achieved in the second gas cleaning device. The alkaline substance may be chosen from substances having a high pH influence on the cooling liquid. This ensures that the sulphur dioxide uptake ability of the cooling liquid is kept high while having only a small alkaline substance consumption rate. One non-limiting example of an alkaline substance is sodium hydroxide.

According to one embodiment, cooling of the process gas in the second gas cleaning device reduces the temperature of the process gas by 10 - 55°C, such as 20 - 55 °C, such as 30 - 55°C. In this embodiment, the process gas leaving said second device thus has a temperature that is lower than the temperature of the partly cleaned gas having passed through said first device. Having a distinct temperature gradient in the second gas cleaning device may further improve condensation of water vapour from the partly cleaned process gas, and may concurrently further improve sulphur dioxide, and/or SOx, removal.

According to one embodiment, the method further comprises returning used cooling liquid to the second gas cleaning device; wherein during said returning, the used cooling liquid is subjected to heat-exchanging with the seawater feed prior to providing the seawater feed to the first gas cleaning device. Used cooling liquid is thus, after heat-exchanging, forwarded to the second gas cleaning device for utilization once again for cooling of the process gas. Recirculation of used cooling liquid and heat-exchanging enable efficient control of heat transfer in the method by for example improving temperature control of liquid circulation in the second gas cleaning device. Efficient temperature control moreover prevents drying up of the second gas cleaning device and thus maintenance of the liquid balance.

According to one embodiment, all surplus water generated in said second device is passed to said first device. In some instances, all of the condensed water generated in the second gas cleaning device is passed to the first gas cleaning device. In other instances, a portion of the condensed water generated in the second gas cleaning device is added to the recirculation of cooling liquid in order to keep the liquid balance, while the surplus water is passed directly to the first gas cleaning device. In this way, the liquid balance of the second gas cleaning device may be optimized.

There is, in another aspect, provided a gas cleaning system for cleaning a process gas containing sulphur dioxide comprising:
a first gas cleaning device being arranged for receiving the process gas containing sulphur dioxide, for receiving seawater feed and for contacting the process gas with the seawater for removal of sulphur dioxide from the process gas, thereby generating an at least partly cleaned process gas;
a second gas cleaning device being arranged in direct fluid connection with the first gas cleaning device, for receiving the at least partly cleaned process gas having passed through the first gas cleaning device, and for removing at least a portion of the water content of the partly cleaned process gas by means of cooling the partly cleaned process gas to condense water there from, thereby generating a process gas having a reduced content of water vapour;
wherein the first gas cleaning device is arranged for receiving at least part of the condensed water generated in the second gas cleaning device.

It should be understood that specific embodiments as well as advantages disclosed in respect of the method aspect of the invention are contemplated as equally relevant embodiments and advantages, where applicable, to the system aspect of the invention and vice versa. Specific advantages of equivalent embodiments are thus not further elaborated for a second aspect if they are disclosed in respect of a first aspect.

An advantage of the present gas cleaning system is that it provides for a cleaning of the process gas which is efficient both with regards to removal of sulphur dioxide and water vapour as well as with regards to operating and investment costs. By arrangement of said first and second device in direct fluid connection the plot space requirements of the system is for example reduced. More specifically, the overall system size, such as the cross-sectional area and the height of the combination of said first and second device, may be reduced.

According to one embodiment, the second gas cleaning device is arranged for receiving a cooling liquid and for contacting the partly cleaned process gas with the cooling liquid, thereby further generating a used cooling liquid. Said second device may in some instances comprise a direct contact cooler that is arranged for contacting said process gas with said cooling liquid.

Alternatively, the second gas cleaning device may comprise a tube DCC being arranged for indirect cooling of the partly cleaned process gas. In this embodiment, no cooling liquid for direct contacting with the process gas is utilized in the second gas cleaning device.

According to one embodiment, the second gas cleaning device is provided with a packing material for bringing the cooling liquid into contact with the at least partly cleaned process gas. Efficient contact between the cooling liquid and the at least partly cleaned process gas can in this way be achieved in a manner which does not generate a large amount of very small liquid droplets that might harm downstream equipment.

According to one embodiment, the second gas cleaning device is provided with a pH-control device which is arranged for controlling the pH of the cooling liquid by supply of an alkaline substance. This may enable more efficient removal of sulphur dioxide from the partly cleaned process gas and utilization of less expensive steel materials in the second gas cleaning device.

According to one embodiment, the gas cleaning system further comprises a heat-exchanger being arranged for receiving seawater feed, prior to passing it to the first gas cleaning device, and for receiving used cooling liquid generated in the second gas cleaning device, the heat-exchanger being arranged for exchanging heat between the seawater feed and the used cooling liquid. Apart from providing advantages as disclosed in respect of the method aspect, such a heat-exchanger may function as a lever for creating a desirable temperature gradient in the second gas cleaning device and thus for further promoting condensation of water vapour from the partly cleaned process gas.

According to one embodiment, a chimney or a duct is provided for directly forwarding the process gas having passed through the first gas cleaning device to the second gas cleaning device. A chimney or duct may thus provide the direct fluid connection between said first and second devices with respect to gases. Having passed the first gas cleaning device, the partly cleaned process gas is directly forwarded, or passed, to the second gas cleaning device.

According to one embodiment, a liquid collection receptacle is provided between the first and the second gas cleaning device, the liquid collection receptacle being arranged for collecting condensed water generated in the second gas cleaning device and for directly forwarding at least part of the condensed water to the first gas cleaning device. Thus, the liquid collection receptacle provides corresponding direct liquid connection between the second gas cleaning device and the first gas cleaning device.

According to one embodiment, the first gas cleaning device is arranged for receiving all of the condensed water generated in the second gas cleaning device. In this embodiment, the first gas cleaning device is capable of handling all of the condensed water; i.e. no water has to be passed elsewhere. In some instances, the first gas cleaning device is arranged for receiving all surplus water generated in the second gas cleaning device.

According to one embodiment, the second gas cleaning device is provided on top of the first gas cleaning device within the same column or tower. This embodiment has the advantage of further reducing the plot space requirements, or the footprint of the system, as well as reducing the overall height of the system.

Further objects and features of the present invention will be apparent from the description and the claims.

### Brief description of the Drawings

The invention will now be described in more detail with reference to the appended drawings in which:
Fig. 1 is a schematic side cross-section view of a power plant with a seawater based gas cleaning system of the prior art.
Fig. 2 is a schematic side cross-section view of a direct contact cooler of the prior art.
Fig. 3 is a schematic side cross-section view of a gas cleaning system according to one embodiment of the invention.

### Description of preferred Embodiments

As used throughout the description, the terms "cleaned", "cleaning" and "partly cleaned" should primarily be understood as referring to removal of SOx compounds, such as sulphur dioxide and sulphur trioxide, from a process gas.

When used to describe connection and relative position between devices, "direct fluid connection" should be understood as a connection providing direct forwarding, or passage, of gas and liquid. One specific example of direct fluid connection is a system wherein the second gas cleaning device is located adjacent, such as on top of, the first gas cleaning device.

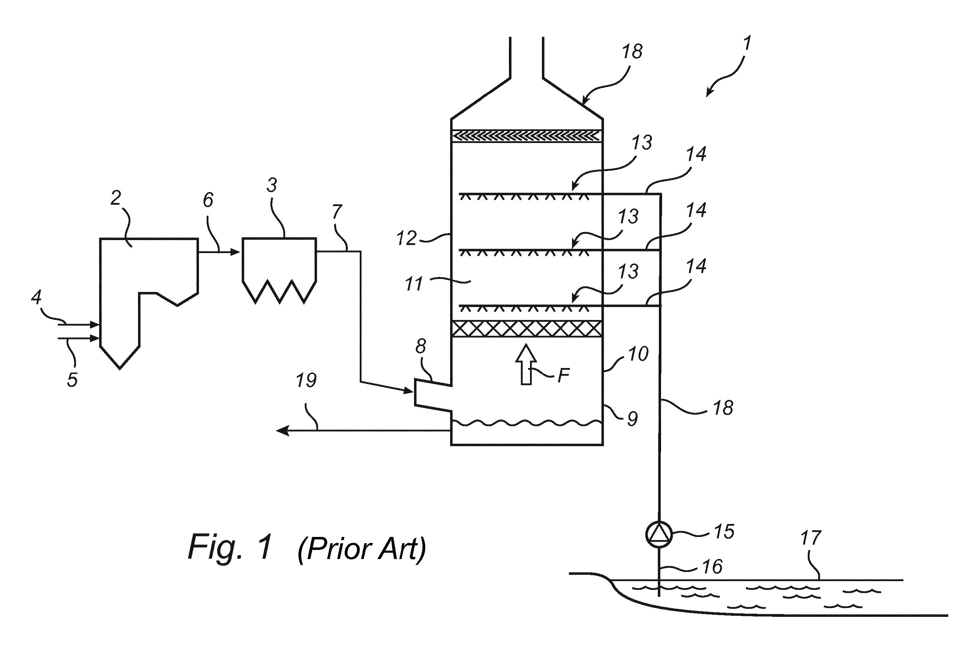

Fig. 1 is a schematic side cross-section view illustrating a power plant 1 according to prior art. Power plant 1 comprises a boiler 2 in which a fuel, such as coal, oil, peat, natural gas, or waste, supplied via feeding pipe 4 is combusted in the presence of oxygen, supplied via oxygen supply duct 5. Oxygen may, for example, be supplied in the form of air and/or in the form of a mixture of oxygen gas and recirculated gases, in case boiler 2 is a so-called "oxy-fuel" boiler. The combustion of fuel generates a hot process gas in the form of a flue gas. Sulphur species contained in the fuel upon combustion form, at least partly, sulphur dioxide, SO₂, which forms part of the flue gas.

The flue gas may flow from boiler 2 via a fluidly connected duct 6, to an optional dust removal device in the form of an electrostatic precipitator 3. The electrostatic precipitator 3 (an example of which is described in US 4,502,872), serves to remove dust particles from the flue gas. As an alternative, another type of dust removal device may be used, such as for example, a fabric filter (an example of which is described in US 4,336,035.

Flue gas, from which most of the dust particles optionally have been removed, flows from the electrostatic precipitator 3 via a fluidly connected duct 7 to a seawater scrubber 18. Seawater scrubber 18 comprises a wet scrubber tower 10. An inlet 8 is arranged at a lower portion 9 of wet scrubber tower 10. Duct 7 is fluidly connected to inlet 8 such that flue gas flowing from electrostatic precipitator 3 via duct 7 may enter interior 11 of wet scrubber tower 10 via inlet 8.

After entering interior 11, flue gas flows vertically upwards through wet scrubber tower 10, as indicated by arrow F. Central portion 12 of wet scrubber tower 10 is equipped with a number of spray arrangements 13 arranged vertically one above each other. In the system of Fig. 1, there are three such spray arrangements 13, and typically there are 1 to 20 such spray arrangements 13 in a wet scrubber tower 10. Each spray arrangement 13 comprises a supply pipe 14 and a number of nozzles fluidly connected to each supply pipe 14. Seawater supplied via supply pipes 14 to the nozzles is atomized and contacts in interior 11 of wet scrubber tower 10, the flue gas for absorption of sulphur dioxide, SO₂, there from.

A pump 15 is arranged for pumping seawater via fluidly connected suction pipe 16 from ocean 17, and forwarding the seawater via fluidly connected pressure pipe 18 to fluidly connected supply pipes 14.

Seawater atomized by means of nozzles in interior 11 of wet scrubber tower 10 flows downwardly within wet scrubber tower 10 and absorbs sulphur dioxide from flue gas F flowing vertically upwards within interior 11 of wet scrubber tower 10. As a result of such absorption of sulphur dioxide by the seawater, the seawater gradually turns into effluent seawater as it flows downwardly within interior 11 of wet scrubber tower 10. Effluent seawater is collected in lower portion 9 of wet scrubber tower 10 and is forwarded, via fluidly connected effluent pipe 19, from wet scrubber tower 10 to the ocean or to an effluent seawater treatment system (not shown).

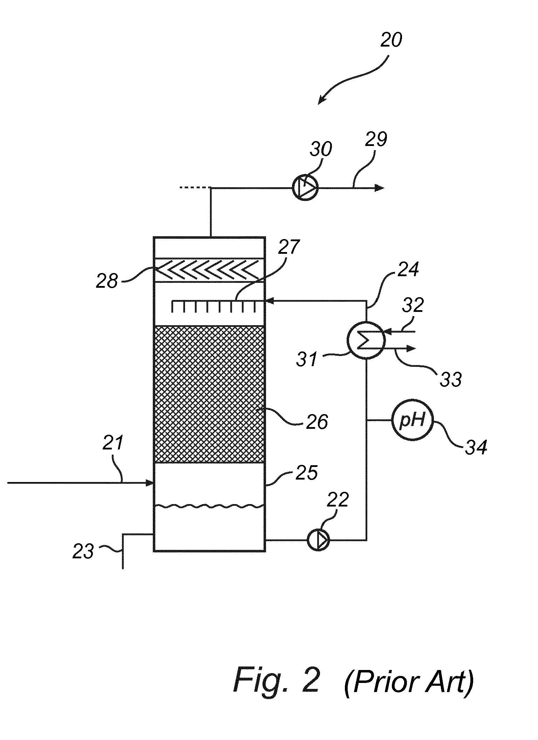

Fig. 2 is a schematic cross-section view illustrating a direct contact cooler (DCC) 20, typically forming part of a CCS system, according to prior art. The DCC 20 comprises a tower 25, which is filled with a packing material 26 for providing good contact between a flue gas, typically containing carbon dioxide, coming from e.g. a limestone based wet scrubber or a spray dryer absorber, and the cooling liquid being circulated in the DCC 20 by means of the pump 22 in the pipe 24. A liquid distributor 27 is arranged for evenly distributing the cooling liquid, e.g. water, over the packing material.

The flue gas is supplied, via the duct 21, to the lower end of the tower 25 and moves vertically upwards through the tower 25, being brought into contact, in a counter-current flow manner, with the cooling liquid flowing down through the packing material 26. At the upper end of the tower 25 a mist eliminator 28 is arranged. The mist eliminator 28 removes liquid droplets from the flue gas.

A heat exchanger 31 is arranged in the pipe 24, as illustrated in Fig. 2. The heat exchanger 31 cools the cooling liquid being transported in the pipe 24. A cooling media is supplied to the heat exchanger 31 via a pipe 32, and leaves the heat exchanger 31 via a pipe 33. The cooling media may come from a cooling tower.

The cooling media supplied to the heat exchanger 31 of the DCC 20, as illustrated in Fig. 2, has a temperature adapted for adequate cooling of the cooling liquid circulating in the pipe 24. In the packing material 26 of the DCC 20 the flue gas is cooled, upon the direct contact with the cooling liquid. As a result of this cooling, generally being a cooling to a temperature below the saturation temperature with respect to water vapour, water condenses from the flue gas inside the DCC 20. Hence, the flue gas leaving the DCC 20 via the duct 29 will have a lower water content than the flue gas entering the DCC 20. A fan 30 is arranged for forwarding the flue gas to e.g. a gas processing unit (not shown).

A pH-sensor 34 is arranged for measuring the pH of the cooling liquid being forwarded in the pipe 24. A control unit (not shown) is typically arranged for receiving a signal from the pH-sensor 34. The control unit controls the supply of an alkaline substance, such as NaOH, from an adjacent alkaline substance storage (not shown). Hence, the control unit typically compares the pH as measured by means of the pH sensor 34 to a pH set point. When the pH measured by the pH sensor 34 is below the pH set point the control unit sends a signal to an alkali supply device (e.g. in the form of a pump) to the effect that alkaline substance is to be pumped from the storage via a pipe (not shown) to the pipe 24 in order to increase the pH of the cooling liquid.

Before leaving the DCC 20, the flue gas is passed through the mist eliminator 28 which removes liquid droplets entrained with the flue gas flow. In some instances, the flue gas of the duct 29 may be reheated in a heat-exchanger (not shown) in order to increase the temperature of the flue gas of the duct 29. Reheating may in this way evaporate some of the very small droplets and mist that have passed through the mist eliminator 28.

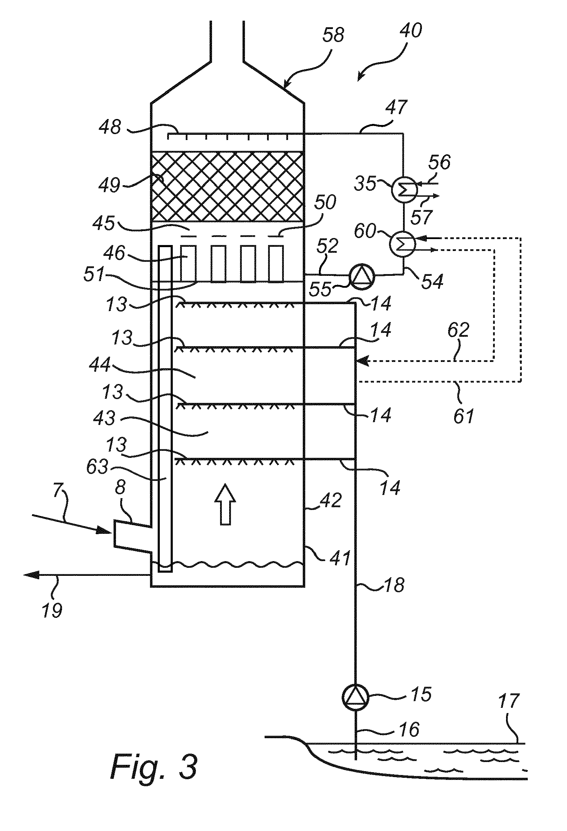

An embodiment of the present invention will now be described with reference to Fig. 3.

Fig. 3 is a schematic cross section view illustrating a combined gas cleaning system 40 according to one embodiment of the present invention. Flue gas containing sulphur dioxide flows e.g. from boiler 2 optionally via a dust removal device 3, as illustrated in Fig. 1, in duct 7 to the first gas cleaning device 42. The flue gas enters the interior 43 of the first gas cleaning device 42, e.g. wet scrubber section, via inlet 8.

Having entered interior 43 of the wet scrubber section 42, flue gas flows vertically upwards through wet scrubber section 42. Central portion 44 of wet scrubber section 42 is equipped with a number of spray arrangements 13 arranged vertically one above each other. In the embodiment of Fig. 3, four such spray arrangements 13 are arranged. There may be 2 to 7 such spray arrangements 13 installed in a wet scrubber section 42. Depending on the process, the number of spray arrangements in operation can be smaller than the number of spray arrangements installed. Each spray arrangement 13 comprises a supply pipe 14 and a number of nozzles fluidly connected to each supply pipe 14. Seawater supplied via supply pipes 14 to the nozzles is atomized and contacts in interior 43 of wet scrubber tower 42, the flue gas for absorption of sulphur dioxide, SO₂, there from.

A pump 15 is arranged for pumping seawater via fluidly connected suction pipe 16 from ocean 17, and forwarding the seawater via fluidly connected pressure pipe 18 to fluidly connected supply pipes 14. In some instances, seawater supplied to pipes 14 may be seawater previously utilized as cooling water in e.g. steam turbine systems associated with boiler 2 prior to such seawater being utilized as scrubbing water in seawater scrubber 42.

Atomized seawater flows downwardly in the interior 43 of the wet scrubber section 42 of the system and absorbs sulphur dioxide from the flue gas flowing vertically upwards. Absorption of sulphur dioxide into the seawater generates an at least partially cleaned flue gas and effluent seawater. The effluent seawater is collected in lower portion 41 of the wet scrubber section 42 of the gas cleaning system. Effluent seawater may be forwarded via fluidly connected effluent pipe 19 to the ocean or to an optional effluent seawater treatment system.

The flue gas forwarded to the wet scrubber section 42 typically has a temperature of 90 - 180 °C. Upon contacting in the interior 43 of the wet scrubber section 42 with the relatively cold seawater deriving from the ocean 17, the flue gas will be partially cooled. Partial cooling in the wet scrubber section may be controlled by control of the supply temperature of the seawater in supply pipes 14 as well as by the number of spray arrangements in operation. Flue gas may thus be cooled to a temperature of 40 - 75 °C in the wet scrubber section 42. The seawater transported in the supply pipes may be partially heated in an optional heat-exchanger 60, as will be further described below. Depending on the amount of supplied seawater, the liquid to gas ratio in the wet scrubber section may be in the range of 5 - 20 : 1.

The at least partly cleaned flue gas leaves wet scrubbing section 42 via chimney arrangement 46, which is adapted to forward the flue gas to the second gas cleaning device 45, e.g. DCC section, of the gas cleaning system 40. The flue gas is forwarded upwardly through the chimney arrangement 46, which is connected to liquid collection receptacle 51, e.g. tray. Above chimney arrangement 46 a top cover arrangement 50 is provided. Flue gas leaves the chimney arrangement 46 below the top cover arrangement 50 and passes between the individual covers of the top cover arrangement 50 into the lower part of the DCC section 45.

Alternatively, a bypass duct (not shown) may be arranged for forwarding the partly cleaned flue gas from the wet scrubber section 42 (first gas cleaning device) to the DCC section (second gas cleaning device) 45. A bypass duct may have an outlet arranged below tray 51, that separates the wet scrubber section 42 from the DCC section 45, and an inlet arranged above tray 51 such that flue gas may enter into the interior of the DCC section 45.

The DCC section 45 comprises a packing material 49, being arranged for providing good contact between the flue gas, at least partly cleaned from sulphur dioxide, and the cooling liquid being circulated in the DCC section 45 by means of pump 55 in pipe 47. A liquid distributor 48 is arranged for distributing the cooling liquid over the packing material. The liquid distributor 48, which may be, for example, Jaeger Model LD3 or Model LD4, which are available from Jaeger Products, Inc, Houston, USA, or liquid distributors available from Koch-Glitsch LP, Wichita, USA, distributes the liquid evenly over the packing material 49 without causing an undue formation of small liquid droplets.

The packing material 49 could be of the so-called structured packing type, for example Mellapak Plus, which is available from Sulzer Chemtech USA Inc, Tulsa, USA, or Flexipak, which is available from Koch-Glitsch LP, Wichita, USA. Alternatively, the packing material 49 could be of the so-called random packing type, for example Jaeger Tri-Pack, which is available from Jaeger Products, Inc, Houston, USA, or IMTP, which is available from Koch-Glitsch LP, Wichita, USA.

The flue gas entering the lower part of the DCC section 45 moves vertically upwards through the DCC 45, being brought into contact, in a counter-current flow manner, with the cooling liquid flowing down through the packing material 49. The liquid to gas ratio of the DCC section 45 may for example be 2 - 6 : 1, such as 3 : 1. Optionally, a mist eliminator, principally as illustrated in Fig. 1, may be arranged at the upper part of the DCC section.

A heat exchanger 35 is arranged in the pipe 47. The heat exchanger 35 is arranged for cooling the cooling liquid being transported in the pipe 52 by means of a cooling media. This cooling media, e.g. water or water containing glycol originating from a cooling tower, is supplied to the heat exchanger 35 via a pipe 56, and leaves the heat exchanger 35 via a pipe 57. Cooling of the at least partly cleaned flue gas is enabled in the DCC section 45 by contacting the partly cleaned flue gas with the cooling liquid in the form of, e.g. clean water. This cooling promotes condensation of water vapour from the flue gas inside the DCC section 45. Hence, the flue gas leaving the DCC section 45 will have a lower water content than the flue gas entering the DCC section 45. The condensed water generated in the DCC section 45 flows downwardly, together with the cooling liquid successively becoming used, in the DCC section 45 and is collected on tray 51. Top cover 50 of the chimney arrangement 46 prevents the used cooling liquid and the condensed water from entering the chimney arrangement 46.

The partly cleaned flue gas is cooled considerably in the DCC section 45 of the gas cleaning system 40, as illustrated in Fig. 3. The flue gas, depleted in water vapour, leaving the gas cleaning system via upper part 58 of the DCC section 45, may have a temperature that is 10 - 55 °C lower than the partly cleaned flue gas entering the DCC section 45. This creates a distinct temperature gradient in the packing material 49, leading to significant condensation of water vapour from the flue gas.

An overflow tube 63 may be arranged, e.g. as a part of tray 51 and extending downwards along the side of the gas cleaning system 40, for handling overflow of liquid in the DCC section 45. The overflow tube, having an inlet in the DCC section 45 and an outlet in the lower part 41 of the wet scrubber section 42, is arranged for forwarding a liquid (volume) portion comprising primarily the water condensed from the flue gas from the DCC section 45 to the wet scrubber section 42. Preferably, all surplus liquid, comprising principally all condensed water generated in the DCC section 45, is passed from the DCC section 45 to the wet scrubber section 42.

Condensed water generated in the DCC section 45 may consequently be passed to the wet scrubber section 42 independently of any recirculation of cooling liquid in the DCC section 45. In the embodiment of Fig. 3, pump 55 withdraws cooling liquid in pipe 52 up to a normal liquid (volume) level, while the overflow tube handles the liquid above the normal (volume) level. This helps to keep the water balance of the DCC section 45.

In addition to cooling, the direct contacting of the cooling liquid and the flue gas in the packing material 49 of the DCC section 45 will also result in further removal of sulphur dioxide. The DCC section 45 thus further generates a cleaned flue gas which may be forwarded to e.g. gas compression. This further increases the sulphur removal capacity of the gas cleaning system, as compared to seawater scrubbers of the prior art.

The sulphur dioxide becoming dissolved in the cooling liquid of the DCC 45 will result in a decrease in the pH value of the cooling liquid circulating in the pipe 47. A pH-sensor (not shown) may be arranged for sensing such decrease in pH-value and for ordering a pump (not shown) to supply an alkaline substance from a storage (not shown) to the pipe 47. pH control may be performed essentially as described with respect to Fig. 2. The set point for the pH-value is typically pH 4,5 - 7. Such a set point has been found to provide efficient removal of sulphur dioxide, without a large and unwanted removal of carbon dioxide from the flue gas. Controlling the pH value of the cooling liquid circulating in the DCC section 45 will also control the removal efficiency of the sulphur dioxide. Hence, the pH set point is typically set to such a value that at least 70 % of the remaining sulphur dioxide content of the partly cleaned flue gas is removed in the DCC section 45. Examples of suitable alkaline substances include sodium hydroxide (NaOH), potassium hydroxide (KOH), sodium carbonate (Na₂CO₃), and sodium bicarbonate (NaHCO₃). Often, the most preferred alkaline substance is sodium hydroxide (NaOH).

The significant condensation occurring in the packing material 49 of the DCC section 45 moreover provides for an efficient removal of sulphur trioxide, SO₃, which is present, principally in the form of an aerosol, in the partly cleaned flue gas. It is assumed that the water condensing in the packing material 49 to a large extent condenses on the aerosol particles, making such aerosol particles grow to droplets of such a size that they become captured by the circulating cooling liquid circulating in the packing material 49.

By efficient condensation and removal of SOx-substances as described above, carbonate formation may be held at a minimum in the DCC section 45.

Optionally, another heat-exchanger 60 is arranged in pipe 47 for further cooling of the cooling liquid circulated in the DCC section 45. The cooling media utilized in the heat-exchanger 60 is the seawater feed transported in pipe 18. Seawater feed enters the heat-exchanger 60 via a pipe 61 and leaves the heat-exchanger via a pipe 62. The pipes 61 and 62 may fluidly connect to pipe 18 or to one or more of the supply pipes 14. In order to balance the flow rate of the cooling liquid in pipe 47, the pipe 61 may be connected at various positions of pipe 18 and supply pipes 14. Heat-exchanger 60 thus generates a cooled cooling liquid, as compared to the cooling liquid upstream of the heat-exchanger 60, and a heated seawater feed, as compared to the seawater feed upstream of the heat-exchanger 60. By addition of this heat-exchanger 60 to the gas cleaning system 40, more efficient cooling, and consequently condensation of water vapour as well as sulphur dioxide removal from the flue gas, is provided for in the DCC section 45. Alternatively, heat-exchanger 60 may take the place of heat-exchanger 35.

The gas cleaning system of the present invention may advantageously be utilized both at atmospheric pressure and at pressure above atmospheric pressure, such as for example in the range of 5 - 40 bar, such as 8 - 20 bar.

While the present invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc do not denote any order or importance, but rather the terms first, second, etc are used to distinguish one element from another.

## Claims

1. A method of cleaning a process gas containing sulphur dioxide, comprising
in a first gas cleaning device, removing sulphur dioxide from the process gas by contacting the process gas with seawater to generate an at least partly cleaned process gas;
in a second gas cleaning device being arranged in direct fluid connection with the first gas cleaning device, cooling the at least partly cleaned process gas having passed through the first gas cleaning device to condense water there from, thereby generating a process gas having a reduced content of water vapour, and
passing at least a part of the condensed water generated in the second gas cleaning device to the first gas cleaning device.

2. The method according to claim 1, wherein cooling in the second gas cleaning device comprises contacting the at least partly cleaned process gas with a cooling liquid to condense water there from, thereby further generating a used cooling liquid.

3. The method according to claim 2, further comprising
polishing, in the second gas cleaning device, the partly cleaned process gas to further remove sulphur dioxide there from, thereby generating a cleaned process gas.

4. The method according to claim 3, further comprising controlling the pH-value of the cooling liquid to be in the range of 4,5 - 7 by supply of an alkaline substance.

5. The method according to any one of the preceding claims, wherein cooling of the process gas in the second gas cleaning device reduces the temperature of the process gas by 10 - 55 °C.

6. The method according to any one of claims 2-5, further comprising
returning used cooling liquid to the second gas cleaning device;
wherein during said returning, the used cooling liquid is subjected to heat-exchanging with the seawater feed prior to providing the seawater feed to the first gas cleaning device.

7. The method according to any one of the preceding claims, comprising passing all surplus water generated in the second gas cleaning device to the first gas cleaning device.

8. A gas cleaning system for cleaning a process gas containing sulphur dioxide comprising:
a first gas cleaning device being arranged for receiving the process gas containing sulphur dioxide, for receiving seawater feed and for contacting the process gas with the seawater for removal of sulphur dioxide from the process gas, thereby generating an at least partly cleaned process gas;
a second gas cleaning device being arranged in direct fluid connection with the first gas cleaning device, for receiving the at least partly cleaned process gas having passed through the first gas cleaning device, and for removing at least a portion of the water content of the partly cleaned process gas by means of cooling the partly cleaned process gas to condense water there from, thereby generating a process gas having a reduced content of water vapour;
wherein the first gas cleaning device is arranged for receiving at least part of the condensed water generated in the second gas cleaning device.

9. The gas cleaning system according to claim 8, wherein the second gas cleaning device is arranged for receiving a cooling liquid and for contacting the partly cleaned process gas with the cooling liquid, thereby further generating a used cooling liquid.

10. The gas cleaning system according to claim 9, wherein the second gas cleaning device is provided with a packing material for bringing the cooling liquid into contact with the at least partly cleaned process gas.

11. The gas cleaning system according to claims 9 or 10, wherein the second gas cleaning device is provided with a pH-control device being arranged for controlling the pH of the cooling liquid by supply of an alkaline substance.

12. The gas cleaning system according to any one of claims 9-11, further comprising
a heat-exchanger being arranged for receiving seawater feed, prior to passing it to the first gas cleaning device, and for receiving used cooling liquid generated in the second gas cleaning device, the heat-exchanger being arranged for exchanging heat between the seawater feed and the used cooling liquid.

13. The gas cleaning system according to any one of claims 8-12, wherein a chimney or a duct is provided for directly forwarding the process gas having passed through the first gas cleaning device to the second gas cleaning device.

14. The gas cleaning system according to any one of claims 8-13, wherein a liquid collection receptacle is provided between the first and the second gas cleaning device, the liquid collection receptacle being arranged for collecting condensed water generated in the second gas cleaning device and for directly forwarding at least part of the condensed water to the first gas cleaning device.

15. The gas cleaning system according to any one of claims 8-14, wherein the second gas cleaning device is provided on top of the first gas cleaning device within the same column or tower.
